# EUROPEAN PATENT APPLICATION

(11) **EP 3 629 207 A1**
(43) Date of publication of application: **01.04.2020**
(21) Application number: 19198538.1
(22) Date of filing: 20.09.2019
(51) Int. Cl.: G06F 21/57, H04L 29/06

(54) **VULNERABILITY EVALUATION APPARATUS, VULNERABILITY EVALUATION SYSTEM, AND VULNERABILITY EVALUATION METHOD**

(30) Priority: 26.09.2018 JP 2018180912
(71) Applicant: Clarion Co., Ltd., Saitama-shi, Saitama 330-0081 (JP)
(72) Inventor: SATO, Chinatsu, Tokyo, 100-8280 (JP); KAWAUCHI, Takashi, Tokyo, 100-8280 (JP); ANDO, Eriko, Tokyo, 100-8280 (JP); NAGAI, Yasushi, Saitama, 330-0081 (JP); YONEYAMA, Tetsuhei, Tokyo, 100-8280 (JP); CHEN, Yiwen, Tokyo, 100-8280 (JP)
(74) Representative: MERH-IP Matias Erny Reichl Hoffmann Patentanwälte PartG mbB

(57) **Abstract**

A storage unit 40 of a computer includes: a product configuration information holding unit 41; a component-vulnerability correspondence holding unit 42 indicating security holes; an asset information holding unit 43 that stores asset values of the respective component of the product; a security countermeasure classification holding unit 44 that stores defense target components for the respective security countermeasures and coefficients of countermeasure effects; and an attack map holding unit 46 that stores attack maps indicating attack paths. A processing unit executes a program, to form: an information collection processing unit 21; an attack map creation processing unit 22 that creates an attack map for each product; and a vulnerability evaluation processing unit 23 that calculates priority order among countermeasures from threat levels of security holes of the respective components on the basis of the asset values.

## Description

### BACKGROUND OF THE INVENTION

### 1. Field of the Invention

The present invention relates to a vulnerability evaluation apparatus, and a vulnerability evaluation system and a method, and more particularly, to a vulnerability evaluation apparatus, and a vulnerability evaluation system and a method that can be used in new product development.

### 2. Description of the Related Art

In recent years, technologies for acquiring various kinds of information by communicating with external information communication devices and realizing safe driving support and automatic driving of a vehicle have started spreading for in-vehicle communication systems each including a plurality of electronic control units (ECUs). In such an in-vehicle communication system, the risk of receiving a cyber attack from the outside is increasing, and there is a demand for improvement in security performance. Particularly, unusually heavy burdens are imposed on automobiles not only in passenger protection but also in safety duty in their surrounding environment. Further, the display screen for the control functions and automatic driving support for an automobile is an important component for safety and is of a high asset value. That is, such a display screen is an important unit, and therefore, needs to be carefully defended against attack.

Meanwhile, the software forming such devices may have defects called software vulnerability (hereinafter also referred to as "security holes" or "security vulnerability", or simply as "vulnerability"), such as failures in a computer program or problems in the specifications. The device manufacturer should continue to monitor vulnerability and collect information about vulnerability after product shipment, to maintain vulnerability security performance. That is, the device manufacturer determines a degree of risk at which a product of the manufacturer and the devices that operate in conjunction with the product are harmed due to vulnerability, and provides countermeasures in a case where the degree of risk is too high to be ignored.

With such a background, JP 2008-257577 A is known as a technique for evaluating the vulnerability of a system on the basis of the vulnerability of a target system. JP 2008-257577 A discloses a security diagnostic system capable of detecting an intrusion route based on the vulnerabilities of a product and a target system, and performing security diagnosis on the basis of the detected intrusion route.

The security diagnostic system of JP 2008-257577 A is disclosed as a technology to be used in general-purpose security diagnosis, evaluation, and countermeasures for computer devices or computer application devices in general. Particularly, there is a disclosed function that combines points and searches an intrusion route to a target system on the basis of information about the points with vulnerability in the target system.

In the security diagnostic system disclosed in JP 2008-257577 A, however, it is not possible to determine priority order in coping by taking into account the importance of the defense target. Moreover, in new product development accompanied by frequent specification change, the quality control to cope with a new security hole cannot be performed even if such a security hole newly appears.

### SUMMARY OF THE INVENTION

The present invention has been made in view of such problems, and aims to provide a vulnerability evaluation apparatus that is capable of facilitating quality control by taking into account the importance of defense targets, even when a new security hole appears in new product development accompanied by frequent specification change.

An invention according to a first aspect is a vulnerability evaluation apparatus formed with a vulnerability evaluation computer including at least a storage unit and a processing unit to evaluate threat levels of respective security holes in a plurality of security holes of a product and determine priority order among security countermeasures, a computer being applied to the product. The storage unit includes: a configuration information holding unit that stores information about components of the product; a component-vulnerability correspondence holding unit that stores vulnerability information clearly indicating the security holes for the respective components; an asset information holding unit that stores product IDs of respective products associated with asset values of the respective components of the products; a security countermeasure classification holding unit that stores a defense target component associated with a coefficient numerically indicating a countermeasure effect for each security countermeasure; an attack map holding unit that stores component names forming an attack path, and an attack map that associates the component names with the corresponding vulnerability information; and a program to be executed by the processing unit. The processing unit executes the program, to form: an information collection processing unit that acquires information about the product and stores the information into the storage unit; an attack map creation processing unit that creates the attack map for each product; and a vulnerability evaluation processing unit that calculates the threat levels of the security holes of the respective components on a basis of the asset values, and determines priority order among the security countermeasures to be taken.

The invention according to the first aspect can provide a vulnerability evaluation apparatus that evaluates the threat levels of the security holes of the respective components on the basis of the number of products and the asset values of the respective components, and determines priority order among the security countermeasures. Thus, even if a new security hole appears in new product development accompanied by frequent specification change, it is possible to facilitate the quality control to cope with the new security hole.

An invention according to a second aspect is a vulnerability evaluation method for performing a process of evaluating threat levels of security holes in a plurality of security holes in a product and calculating priority order among security countermeasures in a vulnerability evaluation computer that includes at least a storage unit, a processing unit, and a program to be executed by the processing unit, a computer being applied to the product. The storage unit includes: the program; a configuration information holding unit that stores information about components of the product; a component-vulnerability correspondence holding unit that stores vulnerability information clearly indicating the security holes for the respective components; an asset information holding unit that stores product IDs of respective products associated with asset values of the respective components of the product; a security countermeasure classification holding unit that stores a defense target component associated with a coefficient numerically indicating a countermeasure effect for each security countermeasure; and an attack map holding unit that stores component names forming an attack path, and an attack map that associates the component names with the corresponding vulnerability information. The process to be performed by the vulnerability evaluation processing unit formed by the processing unit executing the program in determining the priority order using information stored in the storage unit includes: acquiring one piece of the vulnerability information from the component-vulnerability correspondence holding unit; selecting one of the attack maps from the attack map holding unit; acquiring an asset value corresponding to an asset of the acquired attack map;
acquiring a degree of difficulty of attack on the security holes from the component-vulnerability correspondence holding unit; multiplying the asset value by the degree of difficulty of attack; and setting an evaluation value on the basis of a calculation result of the multiplication.

The invention according to the second aspect can achieve the same functions and effects as those of the invention according to the first aspect.

According to the present invention, even when a new hole appears in new product development accompanied by frequent specification change, the quality control for coping with the new security hole is easy.

### BRIEF DESCRIPTION OF THE DRAWINGS

Fig. 1 is a block diagram showing a utilization form of a vulnerability evaluation apparatus (hereinafter also referred to as "the present apparatus") according to a first embodiment of the present invention;
Fig. 2 is a block diagram showing the internal configuration of the present apparatus;
Fig. 3 is a block diagram showing the hardware configuration of each of the present apparatus, an administrator terminal, and an in-vehicle device;
Fig. 4 is a sequence diagram showing processes to be performed in the present apparatus and the administrator terminal;
Fig. 5 shows a configuration information table;
Fig. 6 shows a component-vulnerability correspondence table;
Fig. 7 shows an asset information table;
Fig. 8 shows a security countermeasure classification table;
Fig. 9 is a flowchart showing an attack map creation process to be performed in the present apparatus;
Fig. 10 shows a product quantity management table;
Fig. 11 shows an attack path map table (hereinafter also referred to as an "attack map table");
Fig. 12 is a flowchart showing a vulnerability evaluation process to be performed in the present apparatus;
Fig. 13 shows a vulnerability evaluation result output screen of the present apparatus;
Fig. 14 is a block diagram showing a utilization form of a vulnerability evaluation apparatus (also referred to as "the present apparatus") according to a second embodiment of the present invention;
Fig. 15 is a block diagram showing the internal configuration of an in-vehicle device; and
Fig. 16 is a process sequence diagram of the present apparatus, an administrator terminal, and an in-vehicle device according to the second embodiment.

### DESCRIPTION OF THE PREFERRED EMBODIMENTS

### First Embodiment

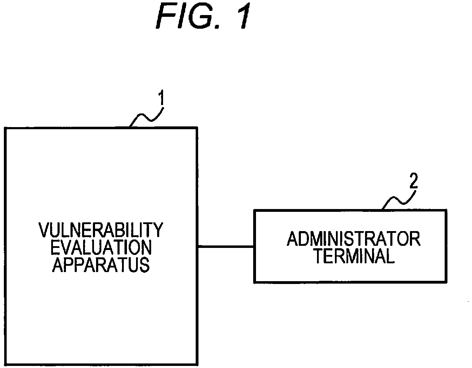

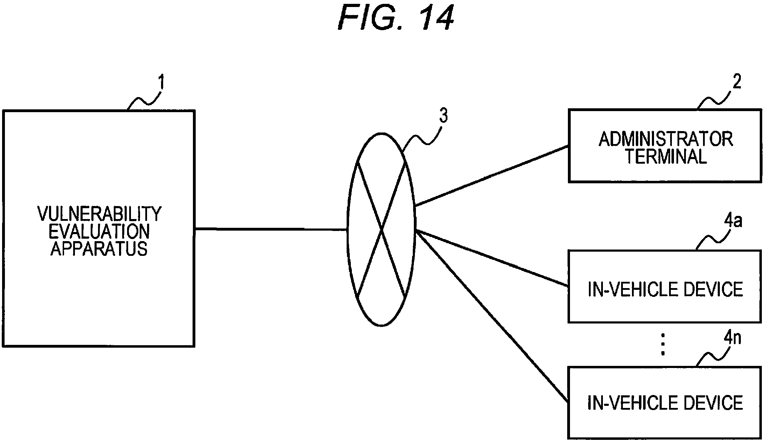

First, a vulnerability evaluation apparatus (the present apparatus) according to a first embodiment will be described below in detail, with reference to Figs. 1 through 13. After that, a second embodiment that slightly differs from the first embodiment in the system configuration will be briefly described with reference to Figs. 14 through 16.

Fig. 1 is a block diagram showing a utilization form of the present apparatus according to the first embodiment. As shown in Fig. 1, the configuration of the first embodiment is a vulnerability evaluation system (hereinafter also referred to as "the present system" or "the first embodiment") having a system configuration in which an administrator terminal 2 is connected directly to a vulnerability evaluation apparatus (the present apparatus) 1 via a wired or wireless transmission path. Although the present system is formed with the present apparatus 1 and the administrator terminal 2 as described above, the present system may be integrally formed by designing the administrator terminal 2 as an input/output unit of the present apparatus 1.

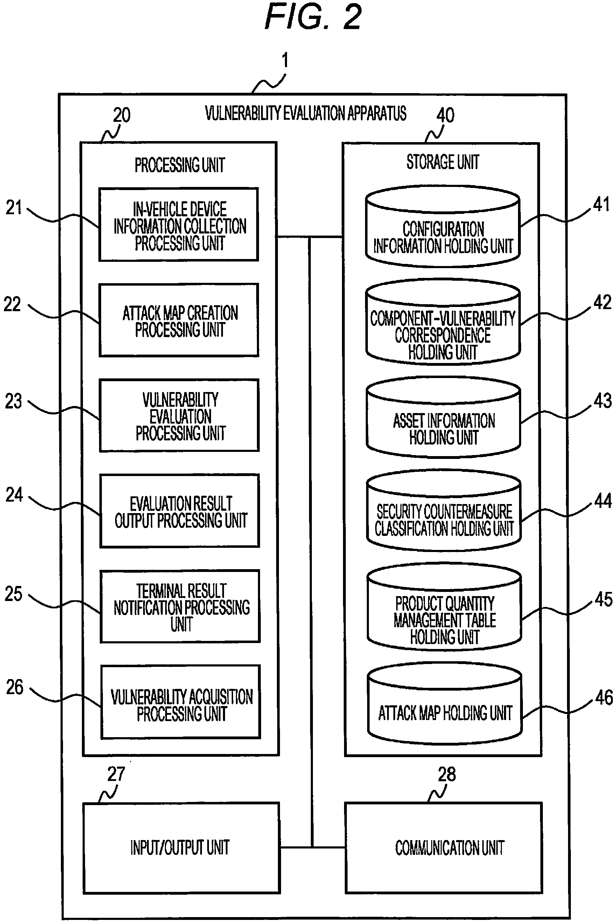

Fig. 2 is a block diagram showing the internal configuration of the present apparatus 1. The present apparatus 1 includes a processing unit 20, a storage unit 40, an input/output unit 27, and a communication unit 28. The processing unit 20 includes an in-vehicle device information collection processing unit 21, an attack map creation processing unit 22, a vulnerability evaluation processing unit 23, an evaluation result output processing unit 24, a terminal result notification processing unit 25, and a vulnerability acquisition processing unit 26. The input/output unit 27 receives an instruction from the operator, inputs/outputs various kinds of data, and outputs a processing result, for example. The communication unit 28 communicates with the outside via a network.

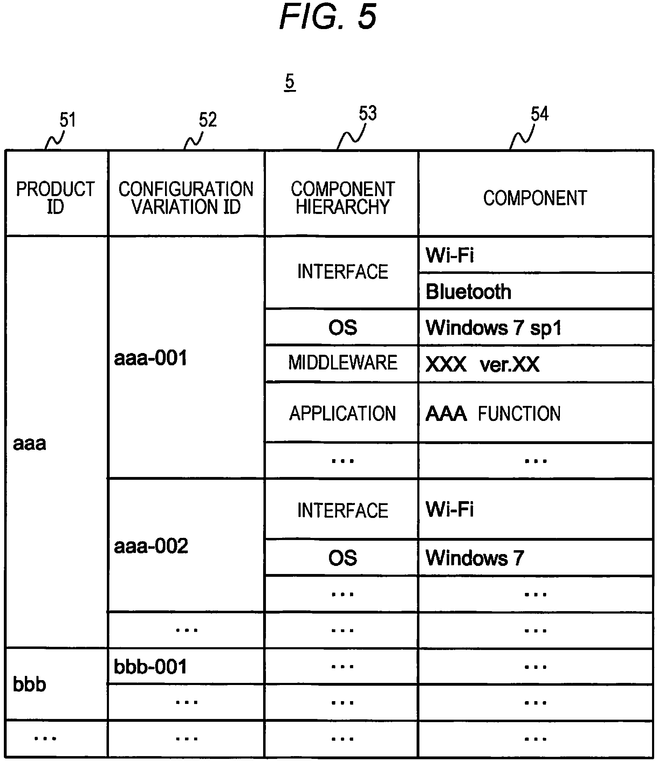

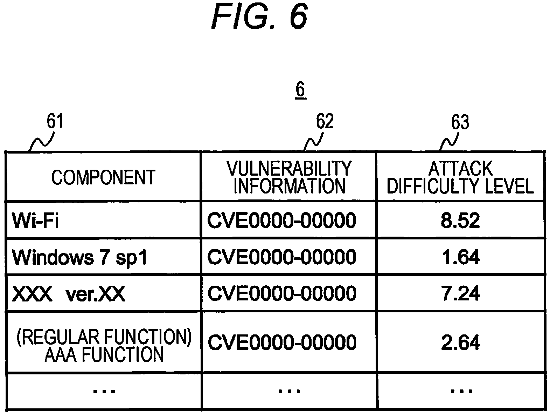

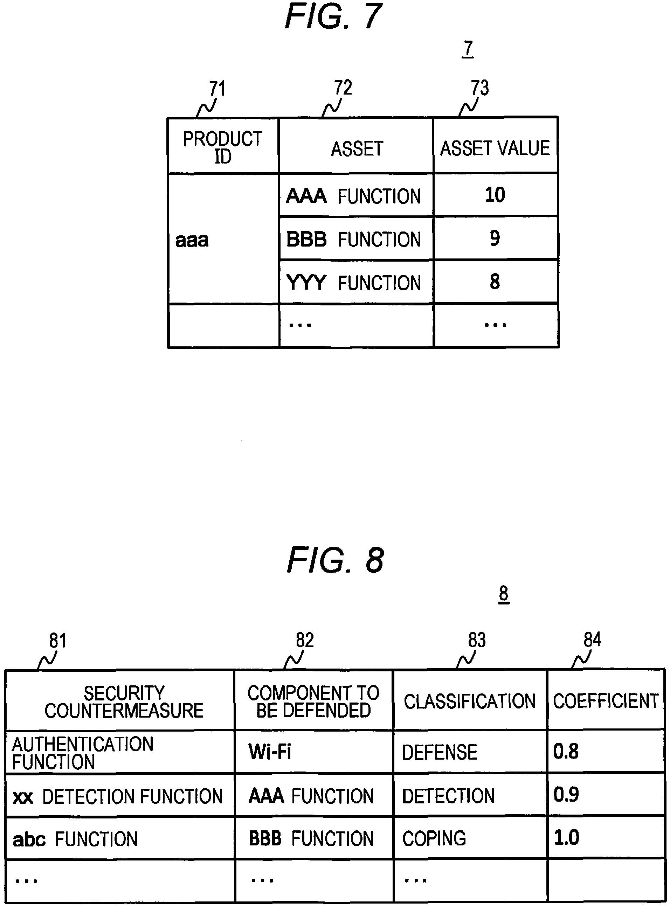

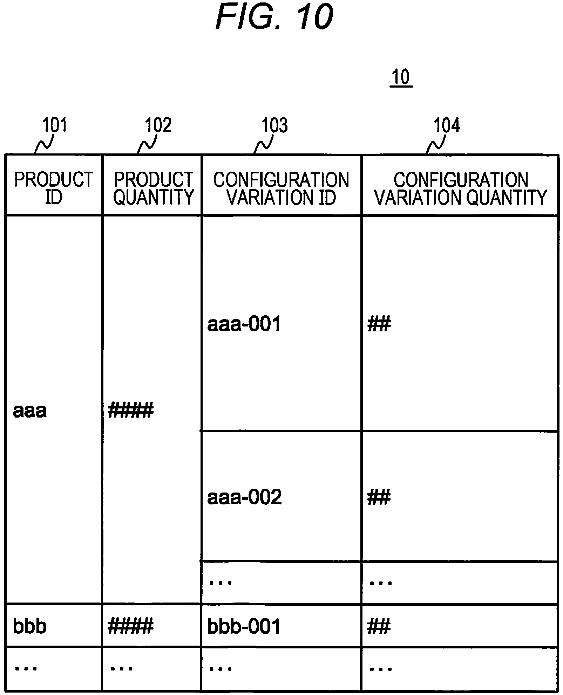

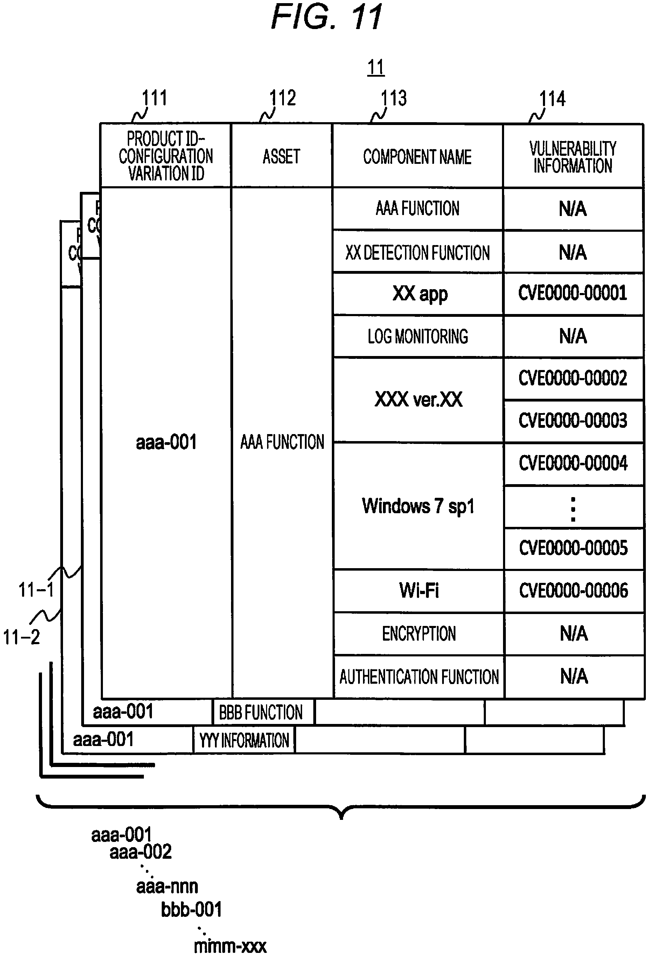

The storage unit 40 includes: a configuration information holding unit 41 that holds a configuration information table 5 described later with reference to Fig. 5; a component-vulnerability correspondence holding unit 42 that holds a component-vulnerability correspondence table 6 described later with reference to Fig. 6; an asset information holding unit 43 that holds an asset information table 7 described later with reference to Fig. 7; a security countermeasure classification holding unit 44 that holds a security countermeasure classification table 8 described later with reference to Fig. 8; a product quantity management table holding unit 45 that holds a product quantity management table 10 described later with reference to Fig. 10; and an attack map holding unit 46 that holds an attack map table 11 described later with reference to Fig. 11.

The in-vehicle device information collection processing unit 21 acquires in-vehicle device information from the administrator terminal 2 via the input/output unit 27 or the communication unit 28, and also stores various information acquired in such a manner into the configuration information holding unit 41, the asset information holding unit 43, the security countermeasure classification holding unit 44, and the product quantity management table holding unit 45.

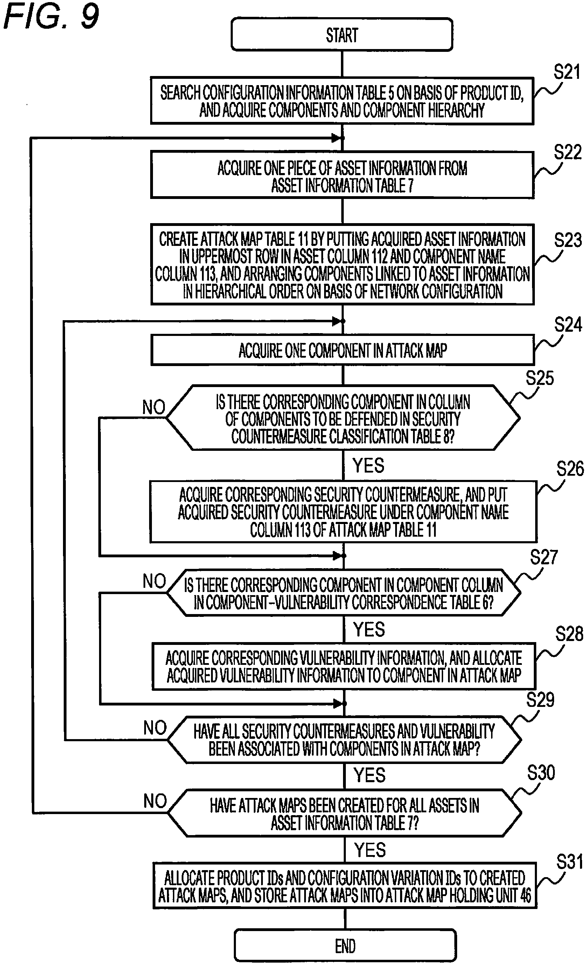

The attack map creation processing unit 22 performs a process of creating an attack map for each in-vehicle device product and each product configuration variation, using the information stored in the configuration information table 5 (Fig. 5), the component-vulnerability correspondence table 6 (Fig. 6), the asset information table 7 (Fig. 7), and the security countermeasure classification table 8 (Fig. 8). The process of creating attack maps will be described later with reference to Fig. 9.

The vulnerability evaluation processing unit 23 performs a process of evaluating priority levels in coping with vulnerability, using the information stored in the configuration information table 5 (Fig. 5), the component-vulnerability correspondence table 6 (Fig. 6), the asset information table 7 (Fig. 7), the security countermeasure classification table 8 (Fig. 8), the product quantity management table 10 (Fig. 10), and the attack map table 11 (Fig. 11).

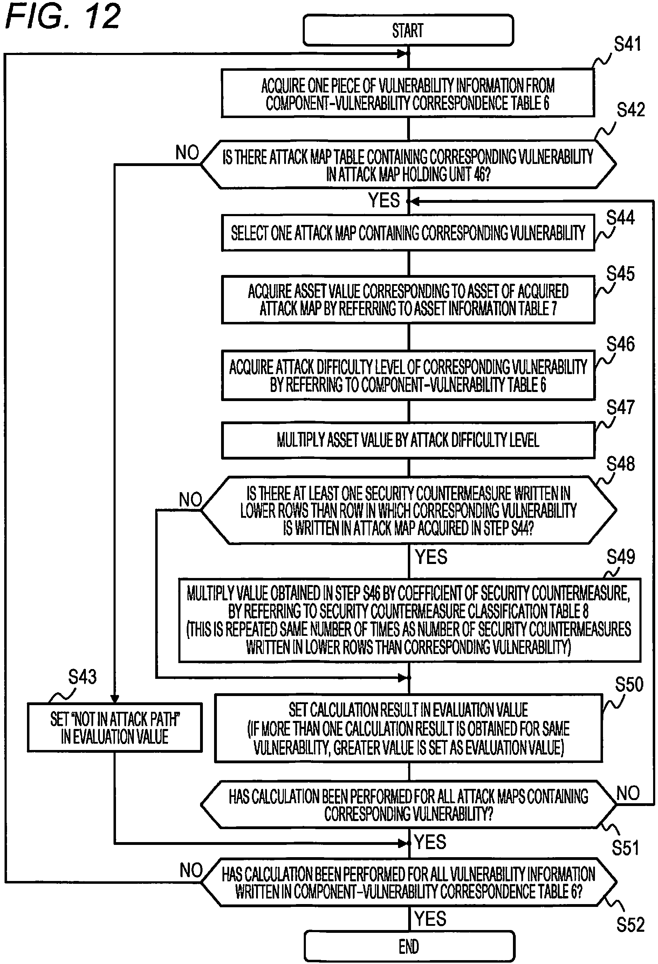

This processing unit 23 compares the results of calculation of the magnitudes of influence on the basis of the asset values and the numbers of operating units for the respective components, to perform vulnerability evaluation to evaluate the security vulnerability of each component, and determine priority order. The process of evaluating priority levels in coping with vulnerability in this processing unit 23 will be described later with reference to Fig. 12. Note that evaluating coping priority levels means the processing unit 23 applying the priority order to varied conditions while continuing the process of determining the priority order in coping.

To output the processing results obtained by the vulnerability evaluation processing unit 23 to the administrator terminal 2 via the input/output unit 27 or the communication unit 28, the evaluation result output processing unit 24 performs a process of adjusting the format of the evaluation results. In a configuration in which the terminal result notification processing unit 25 is connected to an in-vehicle device as described later in the second embodiment, the terminal result notification processing unit 25 performs a process of transmitting the vulnerability evaluation results, the vulnerability coping results, and/or information such as an attention-seeking warning to the administrator or the like, to the in-vehicle device to be evaluated.

The vulnerability acquisition processing unit 26 acquires information related to vulnerability from the administrator terminal 2 via the input/output unit 27 or the communication unit 28. As will be described later in detail with reference to Figs. 5 and 6, the vulnerability acquisition processing unit 26 then reads the components from a column 54 in the configuration information table 5 shown in Fig. 5, and associates the components with the corresponding vulnerability information as shown in the adjacent rows in the columns 61 and 62 in the component-vulnerability correspondence table 6 shown in Fig. 6.

The components and the information related to vulnerability that are associated as above are stored into the component-vulnerability correspondence holding unit 42. The information related to vulnerability is information related to information security flaws of software, and is also called security holes. Vulnerability information is distributed by a server of an organization that discloses security knowledge, for example. Here, the distribution source of the vulnerability information does not matter.

The information related to vulnerability may be acquired by the administrator selecting information related to the product from the above distribution server and be input to the present apparatus 1 via the input/output unit 27 or the communication unit 28, or may be acquired automatically by the vulnerability acquisition processing unit 26 from an external distribution server via the communication unit 28.

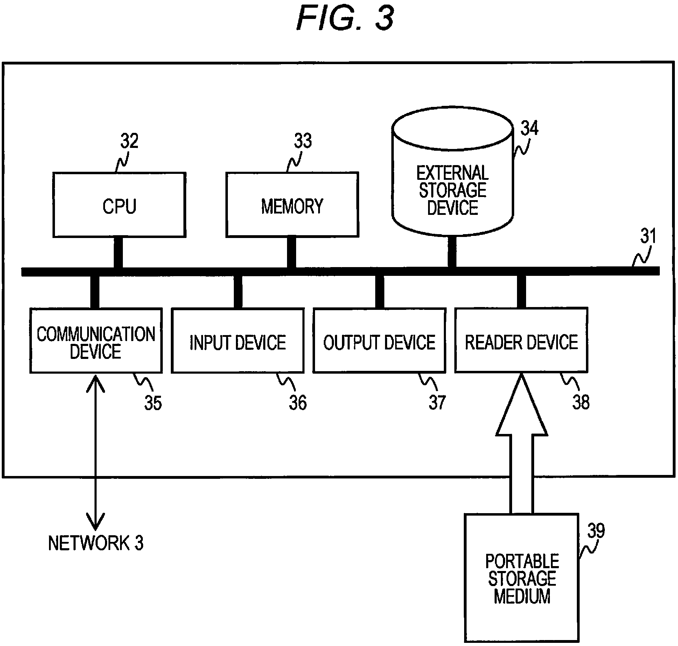

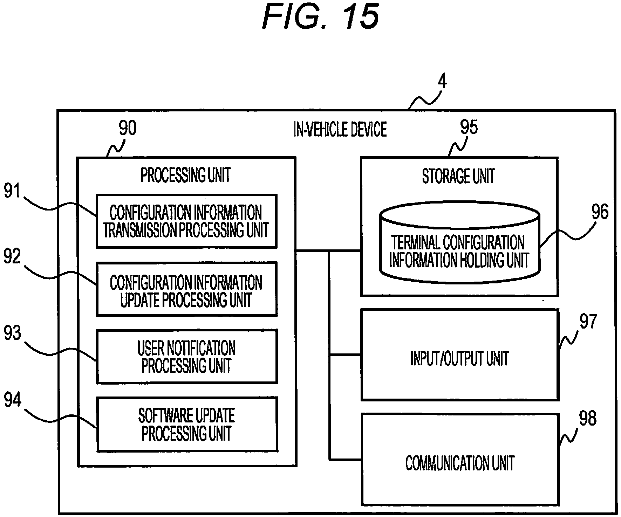

Fig. 3 is a block diagram showing the hardware configuration of each of the present apparatus 1 and the administrator terminal 2 shown in Fig. 1, and the in-vehicle device described later with reference to Fig. 15. Among these devices, the vulnerability evaluation apparatus 1 and the administrator terminal 2 are general-purpose computers (electronic computers). As shown in Fig. 3, a computer includes a central processing unit (CPU) 32, a memory 33, an external storage device 34, a communication device 35, an input device 36, an output device 37, a reader device 38, and an internal communication line (for example, a bus) 31.

The CPU 32 controls the entire computer, as well as performing various processes and calculations. The memory 33 and the external storage device 34 such as a hard disk or the like store various kinds of programs and data in a readable form. The communication device 35 communicates with another computer via the network 3. The input device 36 is formed with a keyboard, buttons, switches, and the like, and inputs the administrator's intention to the computer. The output device 37 is formed with a monitor, a printer, and the like, and displays processing results from the computer so that the administrator can be notified of the processing results. The reader device 38 reads information from a portable storage medium 39 such as a CD-ROM or a USB memory. The internal communication line 31 is a path for transmitting and receiving data between the respective units in the computer.

The CPU 32 loads various programs from the external storage device 34 into the memory 33, and executes predetermined programs, to perform the above mentioned respective processes. That is, the processing unit 20 is formed by the CPU 32 performing processing, and the storage unit 40 is formed by the CPU 32 using the memory 33 or the external storage device 34. Further, the communication unit 28 is formed by the CPU 32 using the communication device 35, and the input/output unit 27 is realized by the CPU 32 using the input device 36, the output device 37, or the reader device 38.

The predetermined programs for forming the processing units 21 through 26 grouped under the processing unit 20 shown in Fig. 2 are made available through one of the routes described below. Specifically, the programs may be stored beforehand into the external storage device 34. Further, the programs may be programs stored in the portable storage medium 39 that can be used by the computer, and be read out as needed through the reader device 38. Alternatively, the programs may be downloaded as needed from another computer connected to a network that is a communication medium this computer can use or to the communication device 35 using carrier waves propagating in the network, and be stored into the external storage device 34.

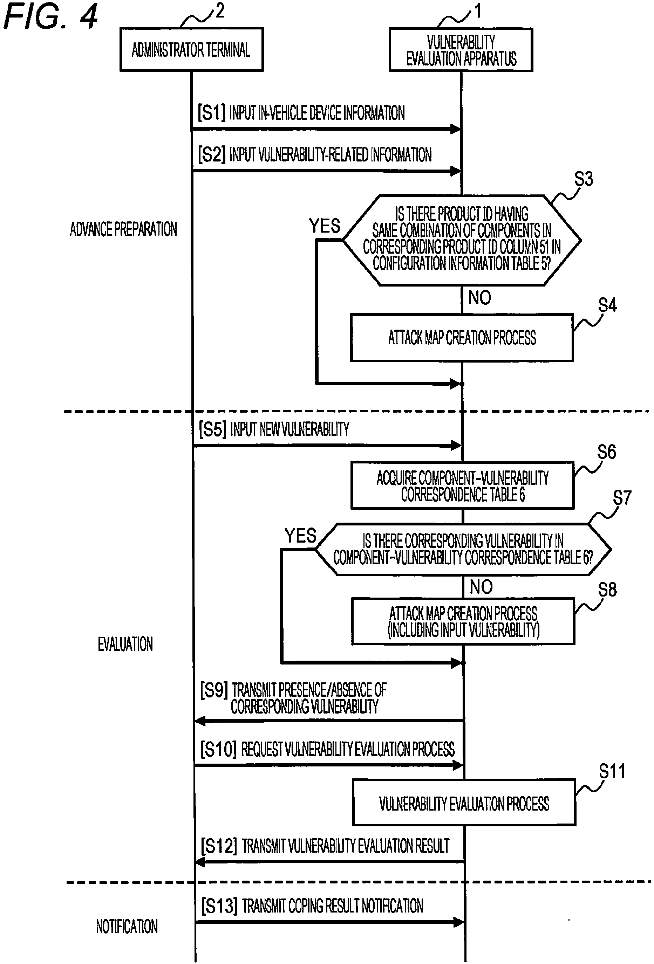

Fig. 4 is a sequence diagram showing processes to be performed in the present apparatus 1 and the administrator terminal 2. First, an advance preparation sequence for evaluating a priority level in coping with vulnerability is described. As shown in the upper portion of Fig. 4, in steps S1 through S4, information about the in-vehicle devices to be evaluated and other necessary information are acquired, and are stored into appropriate sites in the storage unit 40 (Fig. 2) in a readable state. This advance preparation is performed the same number of times as the number of in-vehicle device products that may be evaluated. In a case where there are a plurality of configuration variations with different sets of components among the same products, the process is performed the number of times corresponding to the number of the configuration variations.

First, in step S1, the administrator terminal 2 inputs various pieces of information about an in-vehicle device to be evaluated to the present apparatus 1. The information about the in-vehicle device is processed by the in-vehicle device information collection processing unit 21 of the present apparatus 1, and is stored into the respective suitable holding units 41 through 46. Next, in step S2, the administrator terminal 2 inputs information related to vulnerability to the present apparatus 1.

The information related to vulnerability is processed by the vulnerability acquisition processing unit 26, and is stored into the component-vulnerability correspondence holding unit 42. In step S2 described above, the administrator may acquire the information related to vulnerability by selecting information related to the products from the vulnerability information distribution server and input the information related to vulnerability to the present apparatus 1, or the vulnerability acquisition processing unit 26 may automatically acquire the information related to vulnerability from an external distribution server via the communication unit 28.

In step S3, the in-vehicle device information collection processing unit 21 of the present apparatus 1 acquires the product ID from the in-vehicle device information input in step S1, and checks whether there is the same product ID in a product ID column 51 in the configuration information table 5 (Fig. 5). If there is the same product ID, the in-vehicle device information collection processing unit 21 checks whether the combination of component information in the in-vehicle device information is the same between the information stored in the table and the input information. In the case of the same combination of components (Yes in S3), the in-vehicle device information collection processing unit 21 determines that an attack map has already been created, and ends the advance preparation.

If the combination of components differs (No in S3), on the other hand, the in-vehicle device information collection processing unit 21 generates a new configuration variation ID, and stores the hierarchy of the components of the in-vehicle device and the components into the configuration information table 5 (Fig. 5). The in-vehicle device information collection processing unit 21 then stores information about the components that have not been stored, into the component-vulnerability correspondence table 6 (Fig. 6), the asset information table 7 (Fig. 7), the security countermeasure classification table 8 (Fig. 8), and the product quantity management table 10 (Fig. 10), and the process moves on to step S4.

In step S4, the attack map creation processing unit 22 of the present apparatus 1 creates an attack map for the corresponding configuration variation ID, using the information stored in the configuration information table 5 (Fig. 5), the component-vulnerability correspondence table 6 (Fig. 6), the asset information table 7 (Fig. 7), and the security countermeasure classification table 8 (Fig. 8). The process of creating attack maps will be described later with reference to Fig. 9.

Next, a sequence (S5 to S13) for evaluating the priority level in coping with vulnerability is described. In step S5, the administrator uses the administrator terminal 2, to input vulnerability information newly acquired or inquired to the present apparatus 1. At this stage, a product ID may be input from the administrator terminal 2, and the product to be evaluated may be limited before vulnerability evaluation is conducted. There is no limitation on triggers for conducting vulnerability evaluation. Alternatively, in step S5, an evaluation execution button may be pressed without any input of vulnerability information. If a vulnerability evaluation process is performed without any input of vulnerability information in this manner, step S5 is skipped, and the process is performed from step S6.

In step S6, the vulnerability acquisition processing unit 26 of the present apparatus 1 acquires the component-vulnerability correspondence table 6 (Fig. 6). In step S7, the vulnerability acquisition processing unit 26 of the present apparatus 1 checks whether the vulnerability information input in step S5 is stored in the component-vulnerability correspondence table 6 (Fig. 6). If the vulnerability information is already stored (Yes in S7), the process moves on to step S11. If the vulnerability information is not stored (No in S7), on the other hand, the input vulnerability information is a new vulnerability. Therefore, the new vulnerability information is stored into the component-vulnerability correspondence table 6 (Fig. 6), and the process moves on to step S8.

In step S8, the attack map creation processing unit 22 of the present apparatus 1 re-creates all the attack maps of the already stored product IDs and the configuration variation IDs, including the newly stored vulnerability information. When such re-creation is performed, the process of creating each attack map is the same as that in step S4, and will be described later with reference to Fig. 9.

In step S11, the vulnerability evaluation processing unit 23 of the present apparatus 1 evaluates the priority level in coping with vulnerability, using the information stored in the configuration information table 5 (Fig. 5), the component-vulnerability correspondence table 6 (Fig. 6), the asset information table 7 (Fig. 7), the security countermeasure classification table 8 (Fig. 8), the product quantity management table 10 (Fig. 10), and the attack map table 11 (Fig. 11). The process of evaluating the priority level in coping with vulnerability will be described later with reference to Fig. 12.

In step S12, the evaluation result output processing unit 24 of the present apparatus 1 processes the results of the vulnerability evaluation process in step S11, and transmits the results to the administrator terminal 2. Lastly, a notification sequence is a sequence in which the administrator terminal 2 notifies the present apparatus 1 of the vulnerability coping result and a coping plan in step S13. Note that this notification sequence (S13) may be skipped.

Fig. 5 shows the configuration information table 5. The configuration information table 5 is stored in the configuration information holding unit 41 (Fig. 2). As shown in Fig. 5, the configuration information table 5 includes a product ID column 51, a configuration variation ID column 52, a component hierarchy column 53, and the component column 54.

The product ID column 51 stores information for specifying the types of products. The configuration variation ID column 52 stores information for identifying combinations of components from the same product. The component hierarchy column 53 stores information indicating the physical or network or conceptual distances to the assets of the components. The component column 54 stores information indicating the respective components.

The information stored in the component hierarchy column 53 and indicating the distances may be shown as configuration layers, network configurations, or cyber kill chains, for example. As long as the information can represent the distances from the components to the assets, the method of representation is not limited to any particular method.

The information stored in the component column 54 may be specific product names, software names, function names, interface names, technical names, and the like of the components. As for the product names and the software names, the vulnerability information differs in relation depending on the version of software, and therefore, information such as specific version names should be stored in this column.

As shown in Fig. 5, one product ID may have a plurality of configuration variation IDs. The number of components may vary depending on products and configuration variations. Further, a plurality of components may be stored for one component hierarchy level. This component configuration information table 5 is a table storing the configuration information necessary for creating attack maps for the in-vehicle devices to be evaluated, and is registered beforehand by the administrator. This configuration information table 5 is also changed and registered each time the configuration of an in-vehicle device is changed (updating or a specification change, for example).

Fig. 6 shows a component-vulnerability correspondence table 6. Thus component-vulnerability correspondence table 6 is stored in the component-vulnerability correspondence holding unit 42 (Fig. 2). As shown in Fig. 6, the component-vulnerability correspondence table 6 includes a component column 61 storing information indicating the respective components, a vulnerability information column 62 storing information for identifying each vulnerability, and an attack difficulty level column 63 storing information indicating the impact level of each vulnerability on the asset.

The component column 61 is created with reference to the component column 54 in the configuration information table 5 (Fig. 5). However, there are components whose vulnerability has not been confirmed, the stored contents are not necessarily identical. Moreover, in the case of an automation process to be performed by the vulnerability acquisition processing unit 26 (Fig. 2), if the vulnerability information is already associated with component names (Wi-Fi (registered trademark), Windows 7 (registered trademark), and the like, for example) by an external distribution server, the associated information can also be used. If the component-vulnerability correspondence table 6 (Fig. 6) is created on the basis of the association, the process may be simplified. If that is not enough, the information associated with reference to the components stored in the column 54 in the configuration information table 5 (Fig. 5) may also be used.

The vulnerability information column 62 may not store CVE numbers, but may store the unique names of vulnerabilities or the like, for example. A plurality of vulnerabilities may be associated with one component. In that case, a plurality of rows of vulnerability information is stored for one component.

The attack difficulty level column 63 can use CVSS values defined by the common vulnerability scoring system (CVSS) as vulnerability risk values, for example. Instead of CVSS values, it is possible to use values that are set by the administrator on the basis of a certain index. The index may be set on the basis of the CWE identifier, the degree of social impact of the product, the security policy, or the like.

The objective of the present invention is prioritization in consideration of the importance of the object to be protected. To facilitate quality control on security holes appearing in new products, for example, the vulnerability risk values are numerically set in the range of 1 to 10 in achieving the objective. As a result, it is possible to obtain a vulnerability evaluation apparatus, and a vulnerability evaluation system and a method that are user-friendly.

Further, in a case where an index of attack difficulty levels is set independently of an index already established to have objectivity, a process of assigning influence levels to each piece of the vulnerability information stored in the column 62. The smaller the numerical value of a risk value set by any rule or regulation, the higher the security. The greater the numerical value, the more vulnerable to attack. This indicates the seriousness of the problem. According to the example shown in Fig. 6, the attack difficulty level of Wi-Fi is 8.52, which is a greater numeral value than 1.64, which is the attack difficulty level of Windows 7. Accordingly, Wi-Fi is more vulnerable to attack than Windows 7.

Fig. 7 shows the asset information table 7. This asset information table 7 is stored in the asset information holding unit 43 (Fig. 2). As shown in Fig. 7, the asset information table 7 includes a product ID column 71 storing information for identifying products, an asset column 72 storing information indicating assets among the components of in-vehicle devices, and an asset value column 73 storing information indicating the values of the assets.

The information indicating assets among the components of an in-vehicle device stored in the asset column 72 is functional and data information that is the specifications of the product. In other words, the functions of a product are both components and assets. However, the asset information table 7 (Fig. 7) is required to simply store information about the assets to be taken into consideration at the time of evaluation of priority levels in coping with vulnerability. Therefore, all the functions may be registered as assets, or assets selected beforehand as functions regarded as assets by the administrator may be registered as assets.

The information indicating the values of the assets stored in the asset value column 73 is set by the administrator ranking the values of the assets in advance. For example, the values of assets are ranked in accordance with the effects of the assets at a time of attack on the assets, such as functions related directly to automobile control and personal information with which individuals can be identified. In the asset value column 73 in Fig. 7, numerical values are set so as to be correlated with objective value standings. However, the values are not necessarily objective, and may be set on the basis of unique value judgment criteria, as long as the magnitudes of the values can be compared with one another.

Fig. 8 shows the security countermeasure classification table 8. This security countermeasure classification table 8 is held by the security countermeasure classification holding unit 44. As shown in Fig. 8, the security countermeasure classification table 8 includes a security countermeasure column 81 storing information indicating the security countermeasures installed in the product, a defense target component column 82 storing information about the components to be affected by the security countermeasures, a classification column 83 storing information about the types of the security countermeasures, and a coefficient column 84 storing information indicating the degrees of influence to be imposed by the security countermeasures on the assets at a time of attack (the degrees will be hereinafter also referred to as "attack mitigation degrees" or "security effects".

Specifically, the classification column 83 stores information that classifies the types of security countermeasures into the four categories described below. The four classification categories shown in this example are defense, detection, coping, and recovery, but the classification categories are not limited to these four categories. The coefficient column 84 is set beforehand by the administrator in accordance with the classification. The degrees of mitigation of the security countermeasures against attack on the assets due to vulnerability are determined in advance.

In the example shown in Fig. 8, calculation is performed so that the influence on the assets under the categories of defense and detection is mitigated, and the influence on the asset under the category of coping is hardly mitigated (a component without any security countermeasure) because coping is a countermeasure after attack. However, this example is merely an example, and the settings of the coefficients are not limited to any particular settings.

Fig. 9 is a flowchart showing an attack map creation process to be performed in the present apparatus 1. This process is performed by the attack map creation processing unit 22 (Fig. 2) of the present apparatus 1. As shown in Fig. 9, in the first step S21, the attack map creation processing unit 22 searches the configuration information table 5 (Fig. 5) on the basis of a product ID, and acquires information from the component hierarchy column 53 and the component column 54. In a case where a plurality of subject product IDs are stored in the configuration variation ID column 52, the attack map creation process is performed for each of the configuration variation IDs.

In step S22, the attack map creation processing unit 22 acquires one piece of asset information about the product ID from the asset information table 7 (Fig. 7). The attack map creation processing unit 22 stores the acquired asset information into an asset column 112 in the attack map table 11 (Fig. 11). In step S23, on the basis of the component hierarchy column 53 and the component column 54 in the configuration information table 5, the attack map creation processing unit 22 arranges, in hierarchical order, the components associated with the asset information acquired in step S22, forms a component name column 113 in the attack map table 11, and creates attack paths to the respective assets. Steps S22 through S26 will be described below in conjunction with the attack map table 11 shown in Fig. 11.

In step S24, the attack map creation processing unit 22 acquires one of the components stored in the component name column 113 arranged in step S23. In step S25, the attack map creation processing unit 22 checks whether the information about the component acquired in step S24 is present in the defense target component column 82 in the security countermeasure classification table 8 (Fig. 8).

If the corresponding component is present in the defense target component column 82 (Yes in S25), the process moves on to step S26. If the corresponding component is not present (No in S25), the process moves on to step S27. In step S26, the attack map creation processing unit 22 acquires the security countermeasure corresponding to the component in the security countermeasure classification table 8 (Fig. 8), and puts the acquired security countermeasure in the next row of (the row under) the component in the component name column 113 arranged in step S23 in the attack map table 11. In other words, the component name column 113 in the attack map table 11 stores the component and the security countermeasure corresponding to the component.

In step S27, the attack map creation processing unit 22 checks whether information about the component acquired in step S24 is present in the component column 61 in the component-vulnerability correspondence table 6 (Fig. 6). If the component is present in the column 61 (Yes in S27), the process moves on to step S28. If the component is not present (No in S27), the process moves on to step S29.

In step S28, the attack map creation processing unit 22 acquires the vulnerability information corresponding to the component from the vulnerability information column 62 in the component-vulnerability correspondence table 6 (Fig. 6), allocates the acquired vulnerability information to the components in the attack path arranged in step S23, and forms a vulnerability information column 114 in the attack map table 11. Note that a plurality of pieces of vulnerability information may be associated with one component. Further, in the component name column 113, some of the security countermeasures and the components stored in step S26 might not have any corresponding vulnerability information.

In step S29, a check is made to determine whether the processes in steps S25 through S28 have been performed. Specifically, a check is made to determine whether the attack map creation processing unit 22 has acquired in step S24 all the components in the attack path created in step S23, and completed the allocation of all the vulnerability information corresponding to the components in the attack path. If the result of step S29 is Yes, or if the processes in steps S25 through S28 have been completed, the creation of the attack map for the asset (the asset acquired in S22) corresponding to the product ID has been finished, and the process moves on to step S30.

If the result of step S29 is No, or if the processes in steps S25 through S28 have not been completed, on the other hand, the process returns to step S24. A component that has not been subjected to the processes in steps S25 through S28 is acquired from the components acquired in step S24, and the processes in steps S25 through S28 are completed. Note that any vulnerability is not allocated to some security countermeasures among the components subjected to the processes in steps S25 through S28. In that case, there is no problem, as long as steps S25 through S28 have been carried out.

In step S30, the attack map creation processing unit 22 checks whether attack maps have been created for all the asset information (the column 72 in Fig. 7). Here, all the asset information means all the items stored as the assets (the column 72) of the product IDs (the column 71) in the asset information table 7 (Fig. 7). If attack maps have been created for all of these assets (Yes in S30), the process moves on to step S31. If the creation of attack maps has not been completed (No in S30), the process returns to step S22, and steps S22 through S29 are repeated.

In step S31, product IDs and configuration variation IDs are assigned to the created attack map group, and are stored into the attack map holding unit 46 (Fig. 2). The product IDs and the configuration variation IDs are the same as those in the configuration information table 5 (Fig. 5) acquired in step S21. An example of a table of data held in the attack maps will be described later with reference to Fig. 11.

The process in which the attack map creation processing unit 22 (Fig. 2) creates attack maps in steps S21 though S31 shown in Fig. 9 has been described so far. As a result, attack maps are created in such a form that the security countermeasures to be considered are associated with vulnerability information, with respect to the attack paths to the respective assets.

Fig. 10 shows the product quantity management table. The product quantity management table 10 is stored in the product quantity management table holding unit 45 (Fig. 2). As shown in Fig. 10, the product quantity management table 10 includes a product ID column 101 storing information for identifying the types of products, a column 102 storing information indicating the number of active products having the subject product ID, a configuration variation ID column 103 storing information for identifying combinations of components from the same products, and a column 104 storing information indicating the number of active products having the corresponding configuration variation ID.

As for the number of products and the number of configuration variations, it is not necessary to strictly check and count the actual number of products that are operating at the transfer destinations. In other words, instead of the actual number, the number of products that can be counted with relative ease is registered by the administrator. The number that can be counted with relative ease may be the number of shipped products, the number of products to be shipped, or the number of products to be operated in future, for example.

Fig. 11 shows the attack map table 11. This attack map table 11 is held in the attack map holding unit 46 (Fig. 2), with one unit being one configuration variation ID acquired from the configuration information table 5, an attack map group being formed with a plurality of attack maps 11-1, 11-2, and others.

As shown in Fig. 11, the attack map table 11 includes a product ID-configuration variation ID column 111, the asset column 112, the component name column 113, and the vulnerability information column 114. The product ID-configuration variation ID column 111 diverts the information stored in the product ID column 101 and the configuration variation ID column 103 shown in Fig. 10, and stores the diverted information.

Of these pieces of information, the product IDs diverted from the column 101 are information for identifying the types of products. Meanwhile, the configuration variation IDs diverted from the other column 103 are information for identifying the combinations of components from the same products.

The asset column 112 diverts and stores the asset information held in the asset column 72 shown in Fig. 7. The component name column 113 stores component names. The component names are information for identifying the components forming the attack paths to the assets in the asset column 112.

The components stored in the component name column 113 are the components forming the attack paths to the assets. At least one of the following three pieces of information to be described as first through third information is allocated to each of the components forming the attack paths to the assets. The first information is information about the components held in the column 54 in the configuration information table 5 (Fig. 5).

The second information is information about the assets held in the column 72 in the asset information table 7 (Fig. 7). The third information is information about the security countermeasures held in the column 81 in the security countermeasure classification table 8 (Fig. 8).

The vulnerability information column 114 stores the vulnerability information associated with the component names shown in the respective corresponding rows in the left column in Fig. 11, or in the component name column 113. That is, the vulnerability information is vulnerability information associated with the respective components, and is stored by diverting the corresponding information held in the component-vulnerability correspondence table 6 (Fig. 6).

In a case where there is no vulnerability information 62 associated with the components 61 in the component-vulnerability correspondence table 6, the vulnerability information column 114 in the attack map table 11 (Fig. 11) may be left blank (N/A). In a case where there is a plurality of vulnerabilities associated with one component, on the other hand, a plurality of pieces of vulnerability information is stored for one component name.

The attack maps are created as a result of the attack map creation process (steps S21 through S31) described above with reference to Fig. 9, with the product IDs and the configuration variation IDs being identified. The attack map tables 11 shown in Fig. 11 are attack maps indicating an attack path to each asset, the same number of tables as the number of assets are created for the respective product IDs as shown in Fig. 11, and individual map tables may be further created for the respective product IDs and the respective configuration variation IDs. The plurality of attack maps 11-1 and 11-2 is held in the form of tables associated with the respective product IDs and the respective configuration variation IDs. However, the table format of the attack maps is not limited to this format.

Fig. 12 is a flowchart showing a vulnerability evaluation process to be performed in the present apparatus 1. In the description of steps S41 through S52 indicating this process, the respective procedures are carried out primarily by the vulnerability evaluation processing unit 23 (Fig. 2) of the present apparatus 1. In the first step S41, one piece of vulnerability information is acquired from the component-vulnerability correspondence table 6 (Fig. 6).

In step S42, the vulnerability evaluation processing unit 23 checks whether the assets to be attacked and the attack paths leading to the assets include a component having the corresponding vulnerability. In other words, in step S42, a check is made to determine whether the attack map holding unit 46 stores an attack map table 11 in which the corresponding vulnerability is written.

If there are no components having the corresponding vulnerability in any attack path (No in S42), the process moves on to step S43. If there is a component having the corresponding vulnerability (Yes in S42), on the other hand, the process moves on to step S44. In step S44, the vulnerability evaluation processing unit 23 acquires the asset value column 73 from the asset information table 7 (Fig. 7), and selects one attack map with a high asset value from the attack map group acquired in step S31 (Fig. 9) .

In step S45, the vulnerability evaluation processing unit 23 refers to the asset information table 7, and acquires the value in the asset value column 73 corresponding to the asset of the acquired attack map. In step S46, the vulnerability evaluation processing unit 23 refers to the component-vulnerability correspondence table 6 (Fig. 6), and acquires the value of the corresponding vulnerability in the attack difficulty level column 63.

In step S47, the vulnerability evaluation processing unit 23 multiplies the asset value by the value of the attack difficulty level. That is, the evaluation calculation result for each vulnerability in step S46 is multiplied by the asset value of the asset to be attacked. In other words, the value of the asset to be attacked is multiplied by the attack difficulty level of the vulnerability of the component in the attack path in the attack map. The process in step S47 is performed for all the pieces of vulnerability information associated with component in the attack map.

In step S48, the vulnerability evaluation processing unit 23 checks whether one or more security countermeasures are written in a lower row than the row of the component with which the corresponding vulnerability is associated in the attack map acquired in step S44. If there is at least one security countermeasure written in a lower row (Yes in S48), the process moves on to step S49. If no security countermeasures are written in any lower row (No in step S48), on the other hand, the process skips step S49, and moves on to step S50.

In step S49, the vulnerability evaluation processing unit 23 creates a list of vulnerability information written in the attack map and the evaluation calculation results in step S47 for the vulnerability. In other words, in step S49, the vulnerability evaluation processing unit 23 refers to the coefficient information (the column 84) of the corresponding security countermeasure from the security countermeasure classification table 8 (Fig. 8), and multiplies the value in step S46 by the coefficient. At this stage, the multiplication is repeated the same number of times as the number of security countermeasures written in the lower row than the corresponding vulnerability.

An example in which multiplication of coefficients such as an asset value, an attack difficulty level, and a coefficient of an attack mitigation degree is performed in steps S47 and S49 has been described as a simple example of the vulnerability evaluation calculation method. However, the vulnerability evaluation calculation method is not limited to any particular calculation method, as long as the attack mitigation degree of the security countermeasure against attack (a security effect) and the level of influence of vulnerability on the asset are taken into consideration in the calculation method.

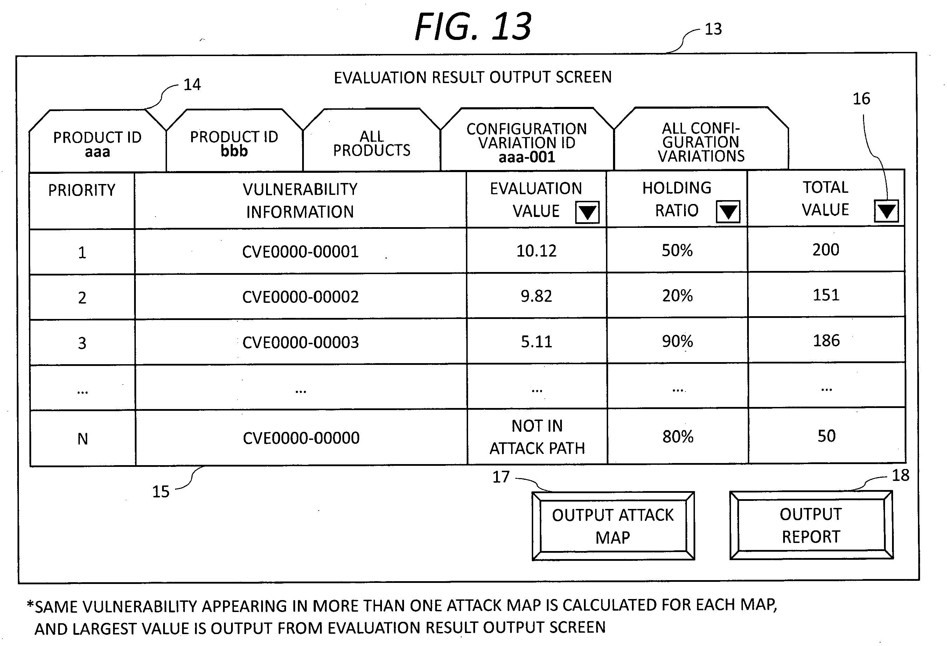

In step S50, the evaluation calculation result obtained in step S47 or S49 is set as the evaluation value. In a case where a plurality of calculation results is obtained for the same vulnerability, the greater value is used as the evaluation value. At this stage, the vulnerability evaluation processing unit 23 sets the list of vulnerability information and calculation result numerical values as the evaluation result created in step S49. The numerical values of the evaluation calculation results are sorted in descending order as the candidates for a priority level in coping with vulnerability. However, it is only an example that candidates for a priority level in coping is the numerical value of an evaluation calculation result. As described later with reference to Fig. 13, it is possible to display a plurality of candidates, such as a holding ratio indicating the ratio between the number of products and vulnerability, and a total value obtained by taking into account evaluation calculation numerical values and the holding ratio, for example. The selection can be made by the administrator.

In step S51, the vulnerability evaluation processing unit 23 checks whether calculation has been performed for all the attack maps in which the corresponding vulnerability is written. In other words, a check is made to determine whether there is another configuration variation ID left for the evaluation target product ID. That is, in step S51, a check is made to determine whether all the attack maps have been selected, and evaluation calculation for each vulnerability has been performed. If evaluation calculation has been performed for all the attack maps (Yes in step S51), the process moves on to step S52.

If evaluation calculation has not been performed for at least one of the attack maps (No in step S51), the process returns to step S44. In other words, a check is made to determine whether the evaluation process (S42 through S50) has been performed for the attack maps of all the configuration variation IDs stored in the attack map table 11. If the evaluation process has not been completed (No in step S51), the process returns to step S44, and the evaluation process is also performed for another configuration variation ID. At this stage, the vulnerability evaluation processing unit 23 compares the results of calculation of the magnitudes of influence on the basis of the asset values and the numbers of operating units for the respective components, to perform vulnerability evaluation to evaluate the security vulnerability of each component, and determine priority order.

Lastly, in step S52, a check is made to determine whether calculation has been completed for all of the vulnerability information written in the component-vulnerability correspondence table 6. If the calculation has been completed (Yes in step S52), the vulnerability evaluation process is ended. If the calculation has not been completed (No in step S52), on the other hand, the process returns to step S41, and steps S41 through S51 are repeated.

Fig. 13 is a vulnerability evaluation result output screen 13 of the present apparatus 1. The evaluation result output screen 13 is designed by the evaluation result output processing unit 24 of the present apparatus 1, and is displayed on the input/output unit 27 of the present apparatus 1 or an output device of the administrator terminal 2.

The evaluation result output screen 13 includes a product display switching tab 14, a table 15 showing vulnerability information and its evaluation values, priority index switching buttons 16, an attack map output button 17, and a report output button 18 with which a result of vulnerability information in selected priority order can be output. The product display switching tab 14can switch and display the priority order for each product ID or each configuration variation ID. Alternatively, the vulnerabilities of all the products, or the vulnerabilities of all the configuration variations may be ranked and displayed.

The priority index switching buttons 16 can display and switch the vulnerability information in ascending or descending order for the respective indices for priority order, such as the holding ratio of the vulnerability among the products from the evaluation value or the quantity information, or the total value obtained by combining the evaluation value and the holding ratio. The final priority order in coping with vulnerability is to be determined by the administrator taking into a plurality of indices into account, and the administrator can select on which index the priority level list to be output is based on.

As described so far, according to the first embodiment, it is possible to determine the priority order in coping with vulnerability by taking into account influence on high-value assets or components that are important in terms of security, and output the results of the determination as the grounds for the determination.

In the first embodiment, the administrator inputs in-vehicle device configuration information and the number of active in-vehicle devices from the administrator terminal. However, the present apparatus and in-vehicle devices may be connected by a network, and those pieces of information may be collected from the in-vehicle devices via the network.

### Second Embodiment

Referring now to Figs. 14 through 16, a second embodiment of the present invention is described in detail. The second embodiment is for collecting information about in-vehicle devices through a network and evaluating vulnerability. Explanation of the same portions as those in the first embodiment is not made herein.

Fig. 14 is a block diagram showing a utilization form of a vulnerability evaluation apparatus (also referred to as "the present apparatus") according to the second embodiment of the present invention. In a vulnerability evaluation system according to the second embodiment, the present apparatus 1, the administrator terminal 2, and a plurality of in-vehicle devices 4a through 4n to be evaluated (hereinafter referred to as in-vehicle devices 4 unless otherwise specified) are connected to a network 3 such as the Internet, a wireless LAN, a mobile telephone network, or any of other various kinds of network.

Fig. 15 is a block diagram showing the internal configuration of an in-vehicle device 4. The in-vehicle device 4 includes a processing unit 90, a storage unit 95, an input/output unit 97, and a communication unit 98. The processing unit 90 includes a configuration information transmission processing unit 91, a configuration information update processing unit 92, an administrator notification processing unit 93, and a software update processing unit 94.

The storage unit 95 includes a terminal configuration information holding unit 96 that stores configuration information about the in-vehicle device. However, in consideration of a risk that communication content is intercepted by an attacker or the in-vehicle device is analyzed for information acquisition, the configuration information held in the in-vehicle device may be part of the information stored in the configuration information table 5 (Fig 5) in the first embodiment. In that case, the administrator may register information not stored in the configuration information table 5 (Fig. 5), through the administrator terminal 2.

The configuration information transmission processing unit 91 regularly transmits the terminal configuration information about the in-vehicle device 4 to a vulnerability processing device via the network 3. The configuration information update processing unit 92 performs a process of updating the terminal configuration information holding unit 96, when updating the version of various kinds of software implemented in the in-vehicle device 4.

The administrator notification processing unit 93 performs a process of displaying a countermeasure result notification transmitted from the present apparatus 1 to the administrator. The administrator may not be the driver of an automobile but may be a maintenance personnel who performs maintenance. Therefore, the administrator notification process may include not only displaying all the contents to the driver but also information processing such as adjustment of information so that the administrator can easily understand the contents. The display timing may also be displayed with a specific command.

The software update processing unit 94 performs a countermeasure software update process as a countermeasure result notification transmitted from the present apparatus 1. For example, the software update processing unit 94 performs a process of downloading and installing a particular patch, a process of executing an OTA update function, and the like.

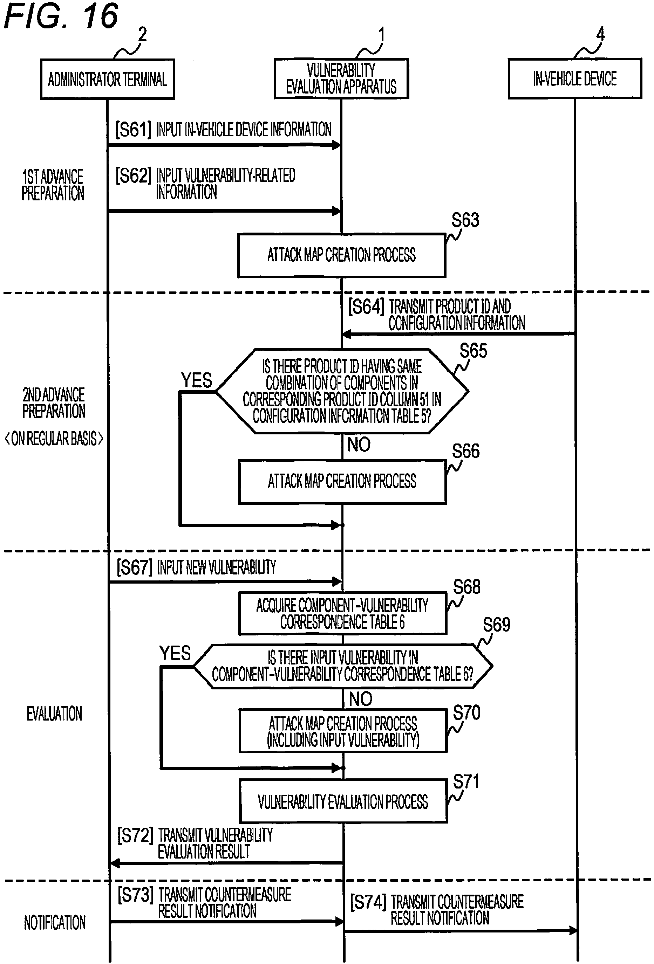

Fig. 16 is a process sequence diagram of the present apparatus 1, the administrator terminal 2, and the in-vehicle device 4 according to the second embodiment. In Fig. 16, the sequence related to the first advance preparation, which is steps S61 through S63 in Fig. 16, is substantially the same as steps S1 through S4 (Fig. 4) of the first embodiment, and therefore, explanation thereof is not made herein. In Fig. 16, as shown in the second advance preparation, the in-vehicle device 4 regularly transmits the product ID of and the configuration information about the in-vehicle device to the present apparatus 1 (S64). Steps S65 and S66 are the same as steps S3 and S4 (Fig. 4) of the first embodiment.

The present apparatus 1 updates the product quantity management table 10 (Fig. 10), using the product ID and the contents of the configuration information transmitted from the in-vehicle device 4 in step S64. By doing this, it is possible to grasp the number of products close to the number of active products in the market, and the number of configuration variations. However, since the communication environments of all the in-vehicle devices 4 on the market are not in perfect conditions, it is not possible to grasp the exact number of products.

The sequence for evaluating priority levels in coping with vulnerability, which is steps S67 through S72, is substantially the same as steps S5 through S9 of the first embodiment. In the notification sequence, the present apparatus 1 transmits all or part of a countermeasure result notification received from the administrator terminal 2 to the in-vehicle device 4 via the network 3.

The second embodiment of the present invention has been described so far. According to this embodiment, information is acquired from an in-vehicle device via a network. Thus, it is possible to determine priority order in coping with vulnerability, taking into consideration the actual condition of the software update of the in-vehicle device and the number of active in-vehicle devices.

It should be noted that the first and second embodiments do not limit the present invention to the configurations thereof. The first and second embodiments have been described on the premise of evaluation of a single in-vehicle device. However, it is also possible to evaluate priority levels in coping with vulnerability in various kinds of devices constituting an automobile system, by holding the components in the configuration information table 5 (Fig. 5) as the component devices of an in-vehicle device or the like.

In the description below, the relevant aspects of the present invention will be described in conjunction with the claimed inventions.
[1] If there is a plurality of security holes in a product to which a computer is applied, the present apparatus 1 evaluates the threat levels of the respective security holes, and determines priority order among security countermeasures (the left column in Fig. 13). The present apparatus 1 is formed with a vulnerability evaluation computer (Fig. 3) that includes at least the storage unit 40 and the processing unit 20.
   The storage unit 40 includes a program that can be executed by the processing unit 20, the configuration information holding unit 41 (Fig. 5), the component-vulnerability correspondence holding unit 42 (Fig. 6), the asset information holding unit 43 (Fig. 7), the security countermeasure classification holding unit 44 (Fig. 8), and the attack map holding unit 46 (Fig. 11).
   The configuration information holding unit 41 (Fig. 5) stores information about the components of the product. The component-vulnerability correspondence holding unit 42 (Fig. 6) stores vulnerability information that clearly indicates security holes for the respective components. The asset information holding unit 43 (Fig. 7) associates and stores the asset values of the respective components of the product with the product ID unique to the product. The security countermeasure classification holding unit 44 (Fig. 8) stores the defense target components associated with the coefficients numerically indicating countermeasure effects (security effects) for the respective security countermeasures.
   The attack map holding unit 46 stores the components names forming an attack path, and the attack maps 11-1 and -2 associated with the vulnerability information corresponding to the component names.
   The processing unit 20 executes a program, to form the information collection processing unit 21, the attack map creation processing unit 22, and the vulnerability evaluation processing unit 23.
   The information collection processing unit 21 acquires information about the product, and stores the information in the storage unit 40. The attack map creation processing unit 22 creates the attack maps 11-1 and -2 for each product or each product configuration variation. The vulnerability evaluation processing unit 23 calculates the threat levels of the security holes of the respective components on the basis of asset values, and determines priority order (Fig. 13) among the security countermeasures to be taken.
   The present apparatus 1 evaluates the threat levels of the security holes of the respective components on the basis of the number of products and the asset values of the respective components, and determines priority order among the security countermeasures. Thus, even if a new security hole appears in new product development accompanied by frequent specification change, it is possible to facilitate the quality control to cope with the new security hole.
[2] In the present apparatus 1, the vulnerability evaluation computer further includes the input/output unit 27 or the communication unit 28. Meanwhile, the storage unit 40 (Fig. 2) holds the configuration information table 5 (Fig. 5), the component-vulnerability correspondence table 6 (Fig. 6), and the attack map table 11 (Fig. 11). In each of these information tables, components form a hierarchy. That is, in each information table, information is stored, with the differences in distance from the components to the assets being arranged in hierarchical order.
   The vulnerability evaluation processing unit 23 calculates threat levels, using the component names, the vulnerability information, information indicating the presence/absence of the vulnerability information column 62 or the vulnerability information, information about the components to be defended, and coefficients numerically indicating the levels of security effects.
   The component names identify the components that form an attack path. The vulnerability information identifies security holes. The vulnerability information is associated with the components identified by the component names. The components to be defended are determined for the respective security countermeasures. The coefficients are determined by quantifying the levels of effectiveness for the respective security countermeasures.
   In the configuration information holding unit 41 (Fig. 2), the configuration information table 5 (Fig. 5), the component-vulnerability correspondence table 6 (Fig. 6), and the attack map table 11 (Fig. 11) holds information in the formats designed on the basis of hierarchy. Therefore, it is possible to output threat levels and priority order (Fig. 13) from the respective tables via the input/output unit 27 or the communication unit 28 so that the threat levels and the priority order can be displayed in an easy-to-understand manner.
   According to the present invention, information obtained with relative ease is input from the input/output unit 27, and such information is organized in each information table in the storage unit 40 using hierarchy based on the differences in distance from the components to the assets. This further contributes to quality control.
[3] A product to be handled by the present apparatus 1 is an in-vehicle electronic device that forms part of an automobile or is mounted in an automobile. Therefore, a product to which a computer is applied is suitably adopted in the case of an in-vehicle electronic device that forms part of an automobile or is mounted in an automobile. In other words, the present apparatus 1 is capable of performing effective protection from cyber attacks, not only because the number of active products thereof is large and the components have high asset values, but also because of passenger protection required for the automobile and the safety duty in the surrounding environment.
[4] A vulnerability evaluation system is a system in which the administrator terminal 2 is connected to the present apparatus 1 in a wired or wireless manner. Being user-friendly, the present system is suitably adopted in products actually being developed as new products.
[5] The present method is a vulnerability evaluation method for performing a process of evaluating the threat levels of a plurality of security holes and calculating priority order (Fig. 13) among security countermeasures in a vulnerability evaluation computer (Fig. 3). The vulnerability evaluation computer may be regarded as the vulnerability evaluation apparatus (the present apparatus) 1. Further, the products to be handled are computer application devices as in the present apparatus 1.
   The storage unit 40 is as described in the explanation of the present apparatus 1. Further, when a program is executed by the processing unit 20, the vulnerability evaluation processing unit 23 is formed. The process to be performed by the vulnerability evaluation processing unit 23 in determining priority order (Fig. 13) using the information stored in the storage unit 40 includes steps S41 through S47 described below. The present method achieves the same effects as those of the present apparatus.
   In step S41, one piece of vulnerability information is acquired from the component-vulnerability correspondence holding unit 42. In step S44, one attack map is selected from the attack map holding unit 46. In step S45, the asset value corresponding to the asset of the acquired attack map 11-1 or -2 is acquired from the asset information holding unit 43. In step S46, the attack difficulty level to the corresponding security hole is acquired from the component-vulnerability correspondence holding unit 42. In step S47, the asset value is multiplied by the attack difficulty level. An evaluation value is then set on the basis of the calculation result of the multiplication.
[6] In the present method, the procedure for determining priority order (Fig. 13) preferably includes steps S1 through S12 and S61 through S72. These procedures are carried out on the basis of communication between the administrator terminal 2 and the vulnerability evaluation computer via the input/output unit 27 or the communication unit 28 disposed in the vulnerability evaluation computer (the present apparatus 1).

In steps S1 and S61, product information is input from the administrator terminal 2 to the vulnerability evaluation computer. In steps S2 and S62, information related to security holes is input from the administrator terminal 2 to the vulnerability evaluation computer. In the attack map generation steps S4 and S63, the vulnerability evaluation processing unit 23 indicates the attack path in the form of the attack map 11-1 or -2. In steps S12 and S72, in response to a request, the vulnerability evaluation result (Fig. 13) is transmitted from the vulnerability evaluation computer to the administrator terminal 2. The present method is in line with the current situation of new product development and the like, and is very easy to use.

### Modifications

The first embodiment and the second embodiment may be modified as follows. In the description with reference to Fig. 3, the CPU 32 loads various programs from the external storage device 34 into the memory 33, and executes predetermined programs to perform the respective processes described above. However, a computer may be formed with a field programmable gate array (FPGA) that is a rewritable logic circuit, or an application specific integrated circuit (ASIC) that is an integrated circuit for particular use, instead of the combination of the CPU 32, the external storage device 34, and the memory 33. Alternatively, a computer may be formed with a combination of different configurations, such as a combination of the CPU 32, the external storage device 34, the memory 33, and an FPGA, instead of the combination of the CPU 32, the external storage device 34, and the memory 33.

## Claims

1. A vulnerability evaluation apparatus (1) formed with a vulnerability evaluation computer comprising at least a storage unit (40) and a processing unit (20) to evaluate threat levels of respective security holes in a plurality of security holes in a product and determine priority order among security countermeasures, a computer being applied to the product, wherein
the storage unit (40) includes:
a configuration information holding unit (41) that stores information about components of the product;
a component-vulnerability correspondence holding unit (42) that stores vulnerability information clearly indicating the security holes for the respective components;
an asset information holding unit (43) that stores a product ID of each product associated with asset values of the respective components of the product;
a security countermeasure classification holding unit (44) that stores a defense target component associated with a coefficient numerically indicating a countermeasure effect for each security countermeasure;
an attack map holding unit (46) that stores component names forming an attack path, and an attack map that associates the component names with the corresponding vulnerability information; and
a program to be executed by the processing unit (20), and
the processing unit (20) executes the program, to form:
an information collection processing unit (21) that acquires information about the product and stores the information into the storage unit (40);
an attack map creation processing unit (22) that creates the attack map for each product; and
a vulnerability evaluation processing unit (23) that calculates the threat levels of the security holes of the respective components on a basis of the asset values, and determines priority order among security countermeasures to be taken.

2. The vulnerability evaluation apparatus (1) according to claim 1, wherein
the vulnerability evaluation computer further comprises an input/output unit (27) or a communication unit (28),
the configuration information holding unit (41) stores information indicating differences in distance from the components to the assets as hierarchy, and arranges the information in hierarchical order, the hierarchy of the components being formed with a configuration information table (5), a component-vulnerability correspondence table (6), and an attack map table (11),
the vulnerability evaluation processing unit (23) calculates the threat levels, using:
the component names for identifying the components forming the attack path;
the vulnerability information for identifying the security holes;
the vulnerability information associated with the components identified by the component names, or information indicating presence/absence of the vulnerability information;
information about the component to be defended by each security countermeasure; and
coefficients numerically indicating levels of effectiveness of the respective security countermeasure, and
at least one of the threat level and the priority order is displayed in a format adjusted on the basis of the hierarchy, and is output via one of the input/output unit (27) and the communication unit (28).

3. The vulnerability evaluation apparatus (1) according to claim 1, wherein the product is an in-vehicle electronic device that forms part of an automobile or is installed in an automobile.

4. A vulnerability evaluation system comprising:
the vulnerability evaluation apparatus (1) of claim 1; and
an administrator terminal (2) connected to the vulnerability evaluation apparatus in a wired or a wireless manner.

5. A vulnerability evaluation method for performing a process of evaluating threat levels of a plurality of security holes in a product and calculating priority order among security countermeasures in a vulnerability evaluation computer that includes at least a storage unit (40), a processing unit (20), and a program to be executed by the processing unit (20), a computer being applied to the product, wherein
the storage unit (40) includes:
the program;
a configuration information holding unit (41) that stores information about components of the product;
a component-vulnerability correspondence holding unit (42) that stores vulnerability information clearly indicating the security holes of the respective components;
an asset information holding unit (43) that stores a product ID of each product associated with an asset value for each component of the product;
a security countermeasure classification holding unit (44) that stores a defense target component associated with a coefficient numerically indicating a countermeasure effect for each security countermeasure; and
an attack map holding unit (46) that stores component names forming an attack path, and an attack map that associates the component names with the corresponding vulnerability information, and
the process to be performed by the vulnerability evaluation processing unit formed by the processing unit (20) executing the program in determining the priority order using information stored in the storage unit (40) includes:
acquiring one piece of the vulnerability information from the component-vulnerability correspondence holding unit (42);
selecting one of the attack maps from the attack map holding unit (46);
acquiring an asset value corresponding to an asset of the acquired attack map;
acquiring a degree of difficulty of attack on the security holes from the component-vulnerability correspondence holding unit (42);
multiplying the asset value by the degree of difficulty of attack; and
setting an evaluation value on the basis of a calculation result of the multiplication.

6. The vulnerability evaluation method according to claim 5, wherein
the process of determining the priority order
is performed on a basis of communication between an administrator terminal (2) and the vulnerability evaluation computer via one of an input/output unit (27) and a communication unit (28) that are disposed in the vulnerability evaluation computer, and
includes:
inputting information about the product from the administrator terminal (2) to the vulnerability evaluation computer;
inputting information related to the security holes from the administrator terminal (2) to the vulnerability evaluation computer;
generating attack map indicating the attack path in a form of the attack map, the attack map being generated by the vulnerability evaluation processing unit (23); and
transmitting a vulnerability evaluation result from the vulnerability evaluation computer to the administrator terminal (2) in response to a request.
